# EUROPEAN PATENT SPECIFICATION

(11) **EP 2 879 017 B1**
(45) Date of publication and mention of the grant of the patent: **05.06.2019**
(21) Application number: 14192388.8
(22) Date of filing: 07.11.2014
(51) Int. Cl.: G06F 1/32

(54) **Performing an operating frequency change using a dynamic clock control technique**
Durchführung einer Betriebsfrequenzveränderung durch dynamische Taktsteuerungstechnik
Réalisation de changement de fréquence de fonctionnement à l'aide d'une technique de commande d'horloge dynamique

(30) Priority: 27.11.2013 US 201314092034
(43) Date of publication of application: 03.06.2015
(73) Proprietor: Intel Corporation, Santa Clara, CA 95054 (US)
(72) Inventor: Gendler, Alexander, 27041 Kiriat Motzkin (IL); Sodhi, Inder M., Folsom, CA 95630 (US)
(74) Representative: HGF Limited

(56) References cited:
- EP-A1- 2 818 963
- EP-A1- 2 829 977
- US-A- 6 065 131
- US-A1- 2001 029 590
- US-A1- 2004 123 176
- US-A1- 2007 096 775
- US-A1- 2008 036 613
- US-A1- 2009 019 303
- NASSER KURD ET AL: "Next generation Intel® micro-architecture (Nehalem) clocking architecture", VLSI CIRCUITS, 2008 IEEE SYMPOSIUM ON, June 2008 (2008-06), pages 62-63, XP055222606, Piscataway, NJ, USA DOI: 10.1109/VLSIC.2008.4585952 ISBN: 978-1-4244-1804-6

## Description

### Technical Field

Embodiments relate to power management of a system, and more particularly to power management of a multicore processor.

### Background

Advances in semiconductor processing and logic design have permitted an increase in the amount of logic that may be present on integrated circuit devices. As a result, computer system configurations have evolved from a single or multiple integrated circuits in a system to multiple hardware threads, multiple cores, multiple devices, and/or complete systems on individual integrated circuits. Additionally, as the density of integrated circuits has grown, the power requirements for computing systems (from embedded systems to servers) have also escalated. Furthermore, software inefficiencies, and its requirements of hardware, have also caused an increase in computing device energy consumption. In fact, some studies indicate that computing devices consume a sizeable percentage of the entire electricity supply for a country, such as the United States of America. As a result, there is a vital need for energy efficiency and conservation associated with integrated circuits. These needs will increase as servers, desktop computers, notebooks, Ultrabooks™, tablets, mobile phones, processors, embedded systems, etc. become even more prevalent (from inclusion in the typical computer, automobiles, and televisions to biotechnology).

It is known that power consumption is reduced by lowering an operating frequency at which a core runs. However, not only does reduced frequency reduce power consumption, it further reduces performance. Furthermore, very complicated procedures are involved in changing frequencies in a processor.

European Patent Application No. 2829 977 is directed towards restricting a clock signal delivery based on activity in a processor. European Patent Application No. 2 818 963 is directed towards restricting clock signal delivery in processor. U.S. Patent No. 6,065,131 is directed towards a multi-speed DSP kernel and clock mechanism. A further example of clocking architecture is provided in NASSER KURD ET AL: "Next generation Intel® micro-architecture (Nehalem) clocking architecture", VLSI CIRCUITS, 2008 IEEE SYMPOSIUM ON, 1 June 2008, pages 62-63, XP055222606, ISBN: 978-1-4244-1804-6. U.S. Patent Application Publication No. 2007/096775 is directed towards adaptive voltage scaling for an electronics device. U.S. Patent Application Publication No. 2009/019303 is directed towards clock frequency adjustment for semi-conductor devices. U.S. Patent Application Publication No. 2001/029590 is directed towards a processor having execution core sections operating at different clock rates. U.S. Patent Application Publication No. 2004/123176 is directed towards a dynamically configurable clocking scheme for demand based resource sharing with multiple clock crossing domains. U.S. Patent Application Publication No. 2008/036613 is directed towards a micro-processor with an improved monitoring and protection mechanism.

### Brief Description of the Drawings

FIG. 1 is a block diagram of a system in accordance with one embodiment of the present invention.
FIG. 2A is a block diagram of a portion of a processor in accordance with an embodiment of the present invention.
FIG. 2B includes illustrations of timing diagrams in accordance with an embodiment of the present invention.
FIG. 2C is a block diagram of a processor core in accordance with one embodiment of the present invention.
FIG. 3 is a flow diagram of a method for performing dynamic core clock operating frequency control in accordance with an embodiment of the present invention.
FIG. 4 is a flow diagram of a method for performing clock control operations in accordance with an embodiment of the present invention.
FIG. 5 is a block diagram of a processor in accordance with an embodiment of the present invention.
FIG. 6 is a block diagram of a multi-domain processor in accordance with another embodiment of the present invention.
FIG. 7 is a block diagram of an embodiment of a processor including multiple cores.
FIG. 8 is a block diagram of a system in accordance with an embodiment of the present invention.
FIG. 9 is a block diagram of a processor in accordance with an embodiment of the present invention.

### Detailed Description

In various embodiments, a processor that includes various constituent agents can have an operating frequency dynamically controlled for each such agent using a single base operating frequency generated within the processor. More specifically, embodiments enable a processor to be provided with a single phase lock loop (PLL). In turn, the generated clock signal from this unit, which is at a given operating frequency, can then be dynamically controlled in each agent of the processor, independently and individually, such that the need for multiple PLL's or other clock control logic is avoided.

Furthermore, given that the agents forming a processor all may operate using a single clock control logic, complex clock crossing circuitry may be avoided at interfaces between such different units. More specifically, embodiments provide a processor that avoids the presence of certain buffer circuitry, referred to herein as a bubble generator first in first out buffer (BGF), that otherwise would be present as an interface between certain agents.

In this way, embodiments enable a processor to be designed that consumes reduced real estate and further operates at lower power consumption levels. Still further, performance may be enhanced as certain latencies in data traversal through clock crossing structures can be avoided.

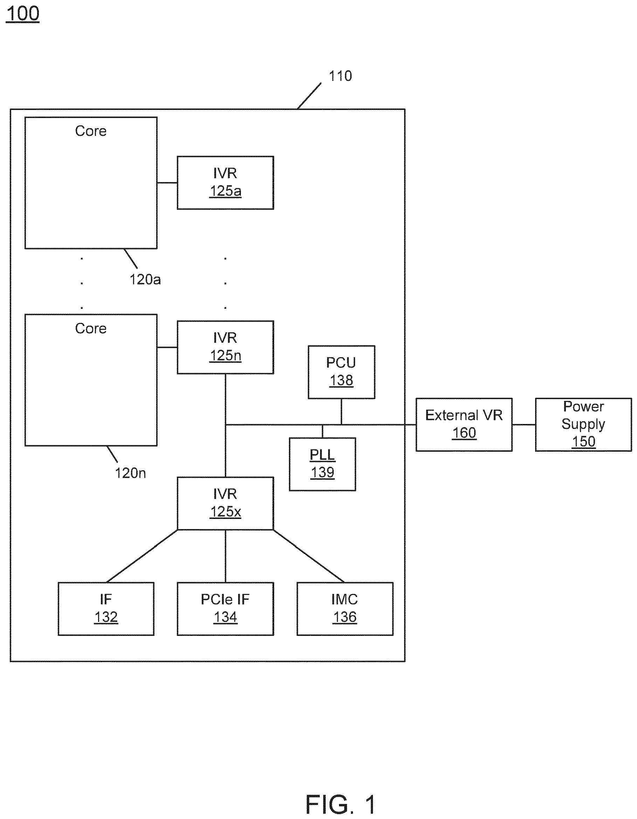

Referring now to FIG. 1, shown is a block diagram of a portion of a system in accordance with an embodiment of the present invention. As shown in FIG. 1, system 100 may include various components, including a processor 110 which as shown is a multicore processor. Processor 110 may be coupled to a power supply 150 via an external voltage regulator 160, which may perform a first voltage conversion to provide a primary regulated voltage to processor 110.

As seen, processor 110 may be a single die processor including multiple cores 120ₐ - 120ₙ. In addition, each core may be associated with an individual voltage regulator 125ₐ - 125ₙ. Accordingly, an integrated voltage regulator (IVR) implementation may be provided to allow for fine-grained control of voltage and thus power and performance of each individual core. As such, each core can operate at an independent voltage and frequency, enabling great flexibility and affording wide opportunities for balancing power consumption with performance. However, understand that embodiments apply equally to processors that operate with cores of a single operating voltage domain. To enable dynamic clock control, embodiments provide for a single phase lock loop (PLL) 139 to generate a processor clock signal at a given operating frequency, which may be provided to independent agents of the processor to allow individual and independent operating frequency control internally in the agent, avoiding the need for multiple PLLs.

Still referring to FIG. 1, additional components may be present within the processor including an input/output interface 132, another interface 134, and an integrated memory controller 136. As seen, each of these components may be powered by another integrated voltage regulator 125ₓ. In one embodiment, interface 132 may be in accordance with the Intel® Quick Path Interconnect (QPI) protocol, which provides for point-to-point (PtP) links in a cache coherent protocol that includes multiple layers including a physical layer, a link layer and a protocol layer. In turn, interface 134 may be in accordance with a Peripheral Component Interconnect Express (PCIe™) specification, e.g., the PCI Express™ Specification Base Specification version 2.0 (published January 17, 2007).

Also shown is a power control unit (PCU) 138, which may include hardware, software and/or firmware to perform power management operations with regard to processor 110. In various embodiments, PCU 138 may include logic to determine that a reduction in an operating frequency for one more units of a processor is desired, and to instruct such units to perform a clock reduction operation with low latency by squashing or restricting communication of clock signals to circuitry of the units, as described herein. Still further, PCU 138 may also include logic to cause the independent units to dynamically change operating frequency without presence of agent internal PLLs, reducing complexity and increasing performance.

While not shown for ease of illustration, understand that additional components may be present within processor 110 such as uncore logic, and other components such as internal memories, e.g., one or more levels of a cache memory hierarchy and so forth. Furthermore, while shown in the implementation of FIG. 1 with an integrated voltage regulator, embodiments are not so limited.

Although the following embodiments are described with reference to energy conservation and energy efficiency in specific integrated circuits, such as in computing platforms or processors, other embodiments are applicable to other types of integrated circuits and logic devices. Similar techniques and teachings of embodiments described herein may be applied to other types of circuits or semiconductor devices that may also benefit from better energy efficiency and energy conservation. For example, the disclosed embodiments are not limited to any particular type of computer systems, and may be also used in other devices, such as handheld devices, systems on chip (SoCs), and embedded applications. Some examples of handheld devices include cellular phones, Internet protocol devices, digital cameras, personal digital assistants (PDAs), and handheld PCs. Embedded applications typically include a microcontroller, a digital signal processor (DSP), network computers (NetPC), set-top boxes, network hubs, wide area network (WAN) switches, or any other system that can perform the functions and operations taught below. As will become readily apparent in the description below, the embodiments of methods, apparatus', and systems described herein (whether in reference to hardware, firmware, software, or a combination thereof) are vital to a 'green technology' future, such as for power conservation and energy efficiency in products that encompass a large portion of the US economy.

Note that the dynamic clock control techniques described herein may be independent of and complementary to an operating system (OS)-based mechanism, such as the Advanced Configuration and Platform Interface (ACPI) standard (e.g., Rev. 3.0b, published October 10, 2006). According to ACPI, a processor can operate at various performance states or levels, namely from P0 to PN. In general, the PI performance state may correspond to the highest guaranteed performance state that can be requested by an OS. In addition to this PI state, the OS can further request a higher performance state, namely a P0 state. This P0 state may thus be an opportunistic or turbo mode state in which, when power and/or thermal budget is available, processor hardware can configure the processor or at least portions thereof to operate at a higher than guaranteed frequency. In many implementations a processor can include multiple so-called bin frequencies above the PI guaranteed maximum frequency, exceeding to a maximum peak frequency of the particular processor, as fused or otherwise written into the processor during manufacture. In addition, according to ACPI, a processor can operate at various power states or levels. With regard to power states, ACPI specifies different power consumption states, generally referred to as C-states, C0, C1 to Cn states. When a core is active, it runs at a C0 state, and when the core is idle it may be placed in a core low power state, also called a core non-zero C-state (e.g., C1-C6 states), with each C-state being at a lower power consumption level (such that C6 is a deeper low power state than C1, and so forth). In general, the clock control techniques described herein may be performed while a processor operates in an active state, e.g., a C0 state.

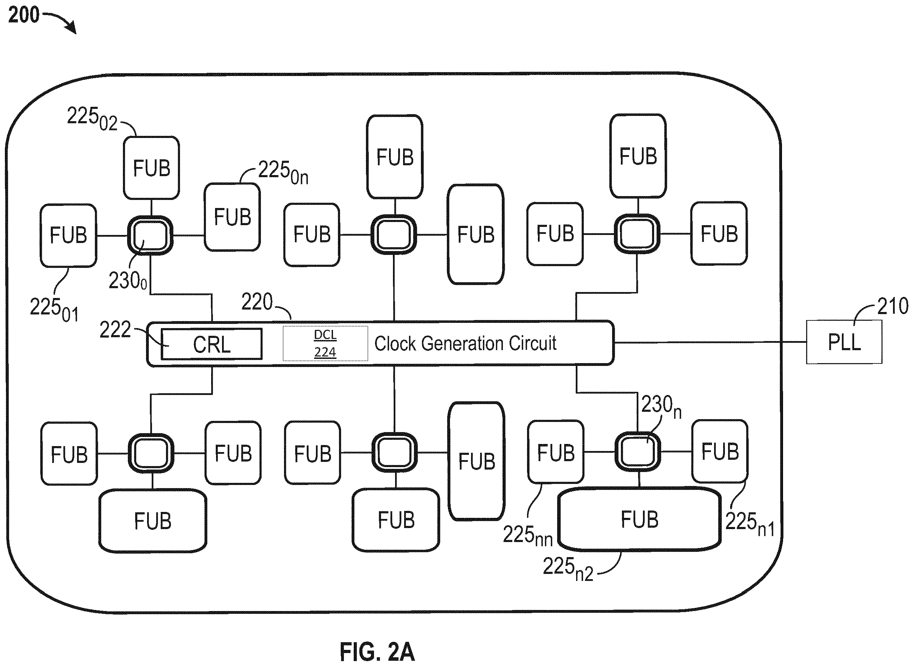

Referring now to FIG. 2A, shown is a block diagram of a portion of a processor in accordance with an embodiment of the present invention. As shown in FIG. 2A, a core 200 is present. In various embodiments, core 200 may be one of multiple cores of a multicore processor. Furthermore, while this particular implementation in the example is in the context of a processor core, the clock control techniques described herein are applicable to other circuitry of a processor or other integrated circuit (IC) such as graphics processors, specialized processing units and so forth. As seen, core 200 receives an incoming clock signal from a PLL 210, which may be part of a system agent or uncore portion of a processor, and the only PLL of the processor in many embodiments. This incoming clock signal may be provided at an operating frequency determined, e.g., by a power controller of the processor such as a power control unit. This incoming clock signal is provided to a clock generation circuit 220.

In general, clock generation circuit 220 is configured to receive the incoming clock and distribute it to various functional unit blocks of the processor. In some embodiments, clock generation circuit 220 may process the incoming clock signal, e.g., to modify its operating frequency for distribution to certain functional unit blocks. Or in other embodiments, clock generation circuit 220 may generally operate to simply distribute this incoming clock signal to various processor circuitry. According to various embodiments, clock generation circuit 220 includes a clock restriction logic 222 that receives a clock restriction command, e.g., from a PCU or other source (not shown for ease of illustration in FIG. 2A) and controls clock generation circuit 220 to reduce distribution of the incoming clock signal to at least certain ones of the functional unit blocks. Note that the squashing or other clock reduction techniques do not modify a pulse width of the clock signal; instead it simply squashes or removes cycles of this incoming clock signal from being communicated to one or more of the logic blocks. More specifically in an embodiment, clock restriction logic 222 may selectively provide either a restricted clock signal or the unrestricted incoming clock signal to each of a plurality of global drivers 230₀-230ₙ in an independent manner.

As further seen, clock generation circuit 220 also includes a dynamic clock logic 224 that is configured to receive other commands, e.g., from a PCU or other source, to dynamically control core clock frequency. More specifically, dynamic clock logic 224 may cause an operating frequency of the core to be dynamically modified. For example, in an embodiment upon reset or powering up from a low power state the PCU or other controller issues a first clock frequency command to cause the core to begin operating at an operating frequency corresponding to the operating frequency of the PLL, which may drive other circuitry of the processor such as an interconnect. Then after the reset or power up sequence is further completed, a second clock frequency command is received to cause the core to operate at a different operating frequency, e.g., a given multiple of the interconnect operating frequency. Of course, understand that depending on a level of busyness, a variety of incoming clock frequency commands can be received and used to dynamically control the core clock frequency.

To provide an appropriate clock signal to each of multiple functional units (FUBs) 225₀₁-225ₙₙ, clock generation circuit 220 outputs one or more versions of the incoming clock signal to a plurality of global drivers 230₀-230ₙ. In general, each functional unit corresponds to a portion of the processor circuitry such as various front end units, execution units, and back end units such as retirement logic. Although in the particular example shown in FIG. 2A each of the global drivers is coupled to three functional unit blocks, understand the scope of the present invention is not limited in this regard and in other embodiments each driver may be coupled to many more such functional units. Furthermore, it is possible for certain functional units to directly receive a clock signal from clock generation circuit 220. Also while shown with these example number of global drivers and functional unit blocks, understand that many more such units may be present in other embodiments.

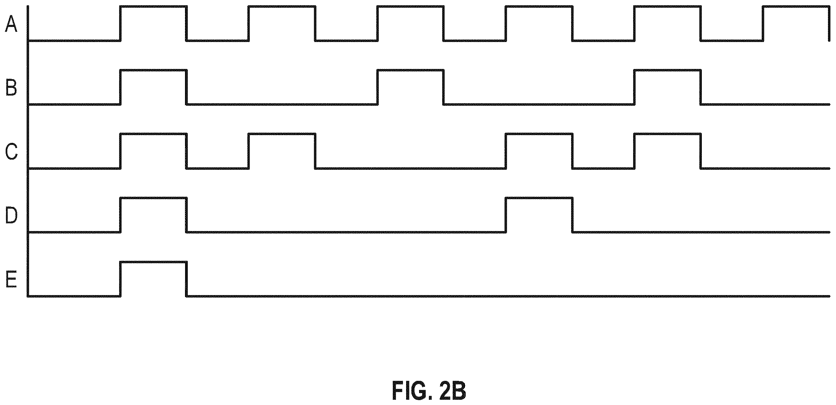

Referring now to FIG. 2B, shown are illustrations of timing diagrams in accordance with an embodiment of the present invention. As shown in FIG. 2B, a clock generation circuit such as that of FIG. 2A receives an incoming clock signal A at a first frequency. This incoming clock signal may be at a level corresponding to an unrestricted clock frequency. For example, a PLL may drive this clock signal to a core at a frequency of, e.g., 2.4 gigahertz (GHz) in a normal operating mode. Instead in a turbo mode, the PLL may drive this clock signal A at a higher, turbo mode frequency, e.g., 3.0 GHz. Of course other values are possible and understand further that in certain low power operation, the signal may be driven to the core at a lower frequency.

Nevertheless, to enable lower power operation with reduced latency, thus avoiding the need for stopping a core or performing other synchronization operations, using a clock restriction command in accordance with an embodiment, incoming clock signal A can be restricted, e.g., by removing clock cycles before it is distributed to at least certain logic of the processor. Thus as seen in FIG. 2B, based on a received clock signal A, one of various restricted clock signals B,C, D or E may be caused to be generated in the clock generation circuit and provided to at least certain portions of the core. Note that both regular duty cycles such as shown in clock signals B, D and E are possible, as well as an irregular duty cycle such as shown in clock signal C. In the illustration of FIG. 2B, clock signal B corresponds to a duty cycle of 33%, where only one of 3 cycles of clock signal A is output. Clock signal D illustrates a duty cycle of 25%, where only 1 of 4 cycles of clock signal A is output, and clock signal E illustrates an even lower duty cycle. In some embodiments, only one of 16 cycles of an incoming clock signal may be output to logic of the core. Note as to clock signal C, 2 cycles are output for every 3 cycles of incoming clock signal A. Understand that many other examples are possible and that embodiments are not limited in this regard. In an embodiment, logic circuitry such as combinational logic may be used to generate a desired output clock signal from clock generation circuit 250 responsive to a clock restriction command. As an example, the logic receives a command for clock restriction, and responsive to this command, an incoming clock signal is distributed over units of the core, which may take a number of cycles (e.g., 4). This distributed clock signal is multiplied with a spine clock in various parts of the core to perform the clock squashing. As a result, all clocks stop toggling until a squash enable signal resets and propagates with a distribution latency.

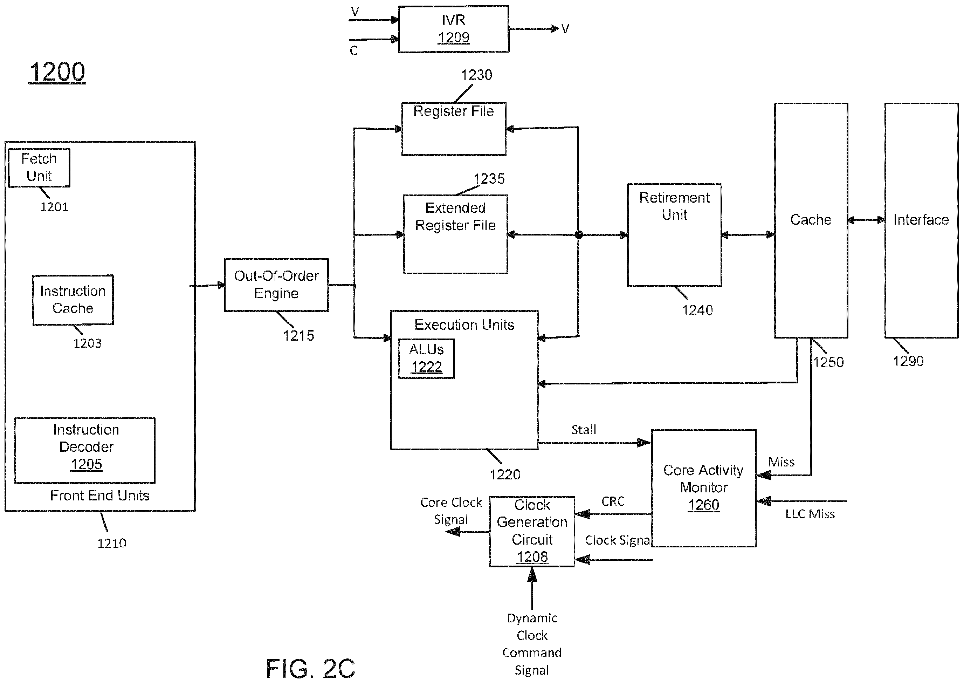

Referring now to FIG. 2C, shown is a block diagram of a processor core in accordance with one embodiment of the present invention. As shown in FIG. 2C, processor core 1200 may be a multi-stage pipelined out-of-order processor. Core 1200 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA). It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

A processor including core 1200 may be a general-purpose processor, such as a Core™ i3, i5, i7, 2 Duo and Quad, Xeon™, Itanium™, XScale™ or StrongARM™ processor, which are available from Intel Corporation. Alternatively, the processor may be from another company, such as a design from ARM Holdings, Ltd, MIPS, etc. Or the processor may be a special-purpose processor, such as, for example, a network or communication processor, compression engine, graphics processor, co-processor, embedded processor, or the like. The processor may be implemented on one or more chips, and may be a part of and/or may be implemented on one or more substrates using any of a number of process technologies, such as, for example, BiCMOS, CMOS, or NMOS.

As shown in FIG. 2C, core 1200 may operate at various voltages as a result of an integrated voltage regulator 1209 which receives an incoming voltage and a control signal and provides a regulated voltage to the core circuitry. In addition, to enable operation at various operating frequencies, a clock generation circuit 1208 is coupled to receive an incoming clock signal, e.g., from a clock logic of a processor such as a PLL. In turn, this clock signal may be distributed as a core clock signal to the various units of the core. Furthermore, when controlled by a core activity monitor 1260 to perform clock restriction as described herein via receipt of a clock restriction command, this core clock signal can be distributed with a reduced number of clock cycles.

As further seen, clock generation circuit 1208 is also coupled to receive an incoming core clock frequency command signal, e.g., from a PCU (shown as a dynamic clock command signal). This signal may be used by clock generation circuit 1208 to dynamically modulate a received incoming clock signal from the PLL and transform it to an instructed operating frequency, e.g., a given multiple of this incoming clock signal. Further understand that this incoming clock frequency command may dynamically be changed to cause different operating frequencies to be generated, e.g., responsive to exit from reset or a low power state and then to provide a different (e.g., higher) operating frequency during an active state in which the processor is executing instructions.

As seen in FIG. 2C, core 1200 includes front end units 1210, which may be used to fetch instructions to be executed and prepare them for use later in the processor. For example, front end units 1210 may include a fetch unit 1201, an instruction cache 1203, and an instruction decoder 1205. In some implementations, front end units 1210 may further include a trace cache, along with microcode storage as well as a micro-operation storage. Fetch unit 1201 may fetch macro-instructions, e.g., from memory or instruction cache 1203, and feed them to instruction decoder 1205 to decode them into primitives, i.e., micro-operations for execution by the processor.

Coupled between front end units 1210 and execution units 1220 is an out-of-order (OOO) engine 1215 that may be used to receive the micro-instructions and prepare them for execution. More specifically OOO engine 1215 may include various buffers to re-order micro-instruction flow and allocate various resources needed for execution, as well as to provide renaming of logical registers onto storage locations within various register files such as register file 1230 and extended register file 1235. Register file 1230 may include separate register files for integer and floating point operations. Extended register file 1235 may provide storage for vector-sized units, e.g., 256 or 512 bits per register.

Different resources may be present in execution units 1220, including, for example, various integer, floating point, and single instruction multiple data (SIMD) logic units, among other specialized hardware. For example, such execution units may include one or more arithmetic logic units (ALUs) 1222, among other such execution units. As seen, execution units 1220 may provide a stall signal to core activity monitor 1260 upon a stall that occurs in one or more of the execution units, e.g., due to a lack of data needed for performing an operation.

Results from the execution units may be provided to a retirement unit 1240 including a reorder buffer (ROB). This ROB may include various arrays and logic to receive information associated with instructions that are executed. This information is then examined by retirement unit 1240 to determine whether the instructions can be validly retired and result data committed to the architectural state of the processor, or whether one or more exceptions occurred that prevent a proper retirement of the instructions. Of course, retirement unit 1240 may handle other operations associated with retirement.

As shown in FIG. 2C, retirement unit 1240 is coupled to a cache 1250 which in one embodiment may be a low level cache (e.g., an L1 cache), although the scope of the present invention is not limited in this regard. Also, execution units 1220 can be directly coupled to cache 1250. From cache 1250, data communication may occur with higher level caches, system memory and so forth. More specifically, in a multicore processor, cache 1250 may couple in turn to an LLC of the processor. Understand that while only a single private cache memory is illustrated in FIG. 2C, in other embodiments a multi-level private cache hierarchy may be present within the core. In the illustration of FIG. 2C, core activity monitor 1260 is further coupled to receive miss signals from the cache memory hierarchy. As seen, cache memory 1250 provides a miss signal and furthermore an LLC miss signal is received, e.g., from a shared LLC coupled to core 1200, responsive to which the activity monitor may signal for a change in operating frequency.

To provide an interface between core 1200 and other agents of a processor, an interface 1290 is provided. In an embodiment, interface 1290 may provide a mechanism to enable communication of data to and from other agents. In some implementations interface 1290 may include one or more buffers to temporarily store information prior to its communication from the core. Note that because in the implementations described herein core 1200 operates at either a common operating frequency with or at a clock multiple of an interconnect, the need for clock crossing logic such as a BGF interposed between circuitry of the core and other processor agents is avoided. Thus such buffers are simply controlled at the given operating frequency of the core clock signal. Furthermore, by way of clock generation circuit 1208, the need for a core-internal PLL also can be avoided.

While shown at this high level in the embodiment of FIG. 2C, understand the scope of the present invention is not limited in this regard. For example, while the implementation of FIG. 2C is with regard to an out-of-order machine such as of an ISA, the scope of the present invention is not limited in this regard. That is, other embodiments may be implemented in an in-order processor, a reduced instruction set computing (RISC) processor such as an ARM-based processor, or a processor of another type of ISA that can emulate instructions and operations of a different ISA via an emulation engine and associated logic circuitry.

Thus in an embodiment, the single PLL of a processor may be implemented within uncore circuitry to enable the PLL to operate independently of core logic. This single PLL may be controlled, e.g., via a PCU or other logic, to generate a clock signal for distribution at a given operating frequency. The different agents of the processor may receive this clock signal and perform dynamic clock frequency changes as described herein. In an embodiment, a single voltage plane may provide a common operating voltage to all cores and an interconnect structure (e.g., a ring interconnect). However, using dynamic clock frequency control as described herein these different agents can operate at different operating frequencies.

In an embodiment in which all cores operate in a single domain, the PCU may select a core operating frequency (Core_f) based on a maximum P-state requested by any of the cores. For core-intensive workloads, the interconnect frequency may be controlled to be equal to the core operating frequency (CLR_f = Core_f). Instead, for a graphics-intensive workload, the interconnect frequency may be controlled to be equal to a maximum of a multiple of the graphics operating frequency or the core operating frequency (e.g., CLR_f = max(1.2^{∗}Graphics_F(GR_F) and (core_f))).

By removing a BGF and PLL (e.g., one each per core or other computing agent), reductions in area, power and complexity can be realized. For example, a typical BGF has a number of cycles of latency in both directions, which can impact performance. Further, by removing a PLL and BGF, area gains, lower dynamic capacitance, and improved floor plan with lower power delivery requirements can be realized. This is due in part, to the various operating voltages to be provided to PLLs and BGFs, when present. Still further, simplified low power state transitions can occur without these structures.

Thus different agents such as different cores may be controlled to operate at lesser ratios than a PLL ratio (e.g., a core may be controlled to run at 1/16 ratio of the PLL ratio). This dynamic clock frequency control maintains the functionality of independent operating frequencies between different processor agents such as a core and a ring interconnect.

Embodiments thus enable a PCU or other control logic to digitally control core operating frequency, allowing much faster and simpler frequency transitions. And with these simpler transitions, a reduced latency is realized before the core transitions to a new operating frequency. This is so, at least in part because there is no PLL or BGF reset to occur within a core, given the lack of these structures. Instead, when a core is to exit from a low power state (or on reset), a core begins operation at a current operating frequency of the processor (namely at the PLL operating frequency, which may correspond to the interconnect operating frequency). In an embodiment, the PCU may instruct the core to begin operation at this frequency via a command to cause core startup microcode to operate. Then, later in the reset sequence, the PCU sends an operating frequency command to the core to cause the core, via the internal clock generation circuit, to operate at a desired operating frequency, as described herein.

Note that frequency control logic of a PCU may initiate an indication to a processor core or other logic of a processor to enter into a clock reduction operation. For example, power consumption metrics such as current consumption, operating temperature, instruction execution rate, and operating voltage among many others are received in a power controller, e.g., a PCU. If a given core is close to reaching (or has reached) a processor constraint such as a thermal constraint, a current constraint or other such constraint, the PCU logic can instruct the core to restrict clock signals to one or more functional units. In an embodiment, this clock restriction control information may be communicated to the core as a command to instruct the core to immediately begin a clock restriction operation. Although this command may take many forms, in an embodiment the command includes a command portion to indicate a clock reduction instruction and a data portion that indicates the measure of clock reduction to be performed. As an example, the logic can send this data portion with a value that corresponds to the number of clock cycles that are to be restricted from being delivered to the core functional units. For example, a value of "1" indicates that a single clock cycle is to be restricted for every active clock cycle. Stated another way, a value of "1" corresponds to a duty cycle of 50% with respect to the incoming clock signal. Instead a value of "2" would indicate that two clock cycles are to be restricted for every active clock cycle for a duty cycle of 33%, and so on. Of course different encodings are possible in other embodiments. In one embodiment, to effect near instantaneous adoption of the clock reduction, this command can be communicated directly to clock generation circuitry of the core such as shown above in FIG 2A. Instead in other embodiments, this command can be distributed to the global drivers which then perform a clock multiplication to obtain the squashed clock frequency. In this way, global drivers associated with circuitry to remain at an unsquashed clock frequency may not receive the signal.

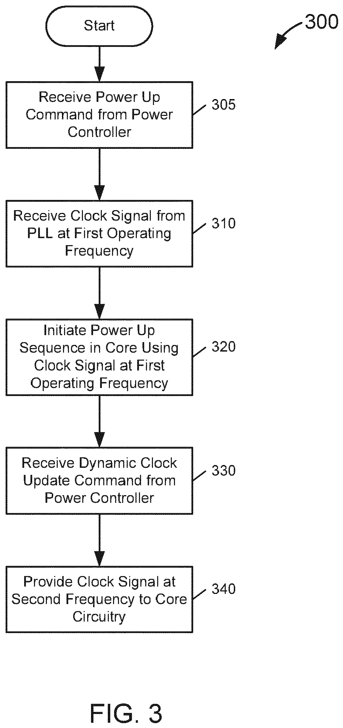

Referring now to FIG. 3, shown is a flow diagram of a method for performing dynamic core clock operating frequency control in accordance with an embodiment of the present invention. As shown in FIG. 3, method 300 may be performed by logic within a core such as the dynamic clock logic within core clock generation circuitry. As seen, method 300 begins by receiving a power up command from a power controller (block 305). As discussed above, this power up command may be received from a PCU responsive to a processor reset or power up from a low power state. In addition to receiving the power up command, also a clock signal may be received from the processor's PLL at a first operating frequency (block 310). In some implementations this operating frequency may be equal to the operating frequency at which an interconnect of the processor operates.

When this command is received, microcode of the processor core for performing a power up sequence may be executed. As part of this microcode or separately within logic of the clock generation circuitry, the core may begin to operate using a clock signal at the first operating frequency (block 320).

Next at block 330 sometime during the power up sequence the PCU may issue a dynamic clock update command. At block 340 this command causes the clock generation circuitry to provide the clock signal at the second operating frequency to core circuitry. At this point, the power up sequence has operated to sufficiently power up circuitry of the core to enable an active state in which instruction execution for a given process may occur. Understand that while shown at this high level in the embodiment of FIG. 3, the scope of the present invention is not limited in this regard.

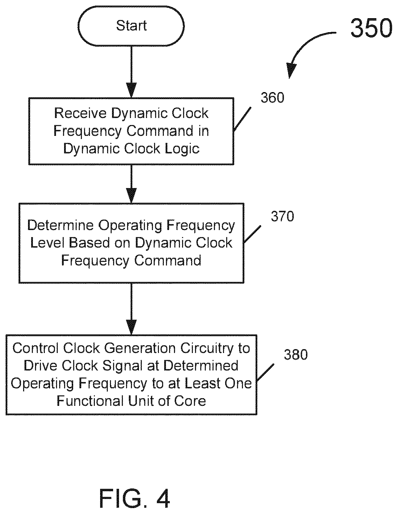

Referring now to FIG. 4, shown is a flow diagram of a method for performing clock control operations in accordance with an embodiment of the present invention. As shown in FIG. 4, method 350 may be performed by logic within a core or other processor circuitry. For example, method 350 may be performed by dynamic clock logic within core clock generation circuitry. As seen, method 350 begins by receiving a dynamic clock frequency command in the dynamic clock logic (block 360). As discussed above, this dynamic clock frequency command may be communicated from a power controller of the processor. Next, control passes to block 370, where an operating frequency level can be determined based on the received command. For example, the command may include a data portion having a value representing a desired core operating frequency. In other implementations, some type of mapping logic enables the dynamic clock logic to map the incoming command to a corresponding operating frequency.

With further reference to FIG. 4, control next passes to block 380 where the clock generation circuitry can be controlled accordingly. More specifically, the circuitry may be controlled to drive a clock signal to at least one functional unit of the core at the requested operating frequency, which is performed directly without any delay for performing a frequency change mechanism for a PLL.

The clock control techniques described herein can be used in many different circumstances. For example, the PCU may instruct a clock restriction command when a processor constraint has been reached or is within a threshold of a constraint, as discussed above. Such constraints may include a thermal constraint so that the clock reduction operations can be used for purposes of thermal throttling. Note that this thermal throttling realized by the clock restriction operation can be performed without the need for interrupt operations, intra-die interrupt stop or lock operations or so forth. Another such constraint may be a current consumption constraint such that an ICCₘₐₓ protection mechanism can be realized without the need to similarly perform complex operations to change a core clock frequency.

Still other embodiments may perform dynamic clock control operations outside of a power up event. For example, embodiments may perform dynamic clock operations to enable greater power to be delivered to other processor circuitry such as one or more graphics processors. When an interconnect that couples both to cores and to graphics processors seeks to provide more bandwidth for graphics operations of the graphics processors, clock control may be performed to enable greater bandwidth to the graphics processors, without the need for a changing a clock frequency provided to a core. This is particularly so in instances in which one or more cores and one of more graphics processors operate in these same domain, and thus at a single voltage. By enabling dynamic control of operating frequency within a core using a dynamic clock control technique as described herein, embodiments enable greater bandwidth and higher operating frequency for a graphics processor that operates in the same domain as the core.

Another instance for enabling clock control operations is to provide for a faster exit latency for one or more cores in a low power state. For example, assume one core is active in a turbo mode and thus is operating at a turbo mode frequency while another core is in a low power state, e.g., a C6 state. Instead of causing the active core to exit the turbo mode and lower its operating frequency using a complex process before allowing the second core to begin the low power exit, embodiments enable concurrent low power exit by the second core while at the same time performing clock restriction operations in the first core to thus enable a faster exit latency for the second core.

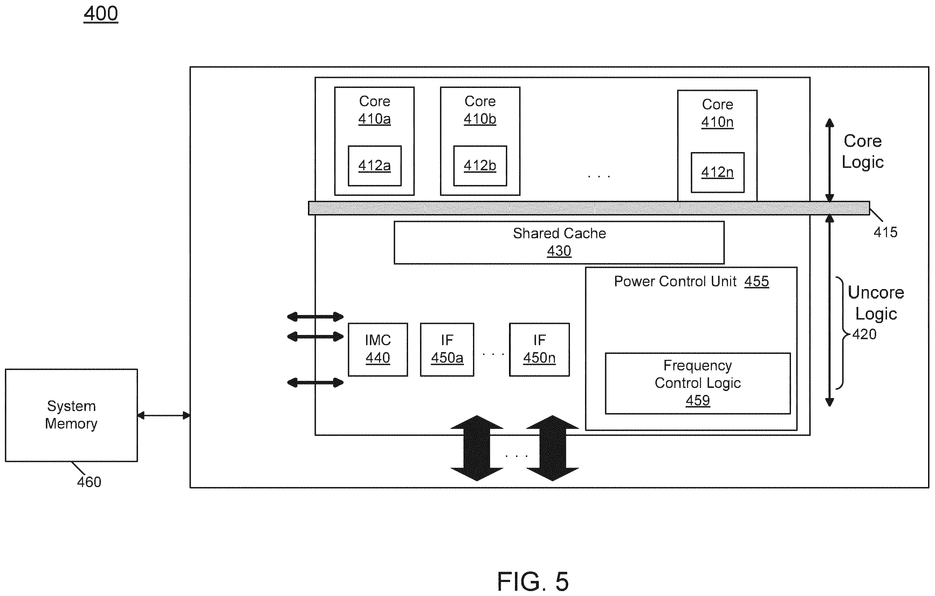

Embodiments can be implemented in processors for various markets including server processors, desktop processors, mobile processors and so forth. Referring now to FIG. 5, shown is a block diagram of a processor in accordance with an embodiment of the present invention. As shown in FIG. 5, processor 400 may be a multicore processor including a plurality of cores 410ₐ - 410ₙ. In one embodiment, each such core may be of an independent power domain and can be configured to enter and exit active states and/or maximum performance states based on workload. As seen, each core includes a clock generation circuit 412ₐ - 412ₙ that receives an incoming clock signal and conditions it for distribution to various functional units of the core. In various embodiments, this clock generation circuitry may include dynamic clock logic and clock restriction logic to receive an indication, e.g., from a power controller such as a power control unit 455 to control an operating frequency and/or to restrict the number of clock cycles provided to some or all functional units of the core, as described herein. The various cores may be coupled via an interconnect 415 to a system agent or uncore 420 that includes various components. As seen, the uncore 420 may include a shared cache 430 which may be a last level cache. In addition, the uncore may include an integrated memory controller 440, various interfaces 450 and a power control unit 455. In various embodiments, power control unit 455 may include a frequency control logic 459 in accordance with an embodiment of the present invention. This logic may dynamically determine an appropriate operating frequency for the various units of the processor including cores and other units, based on configuration information, environmental information, operating parameter information and so forth. Furthermore, frequency control logic 459 may determine that one or more cores is operating at or close to a constraint and accordingly, the logic may instruct the corresponding core or other unit to perform clock restriction as described herein.

With further reference to FIG. 5, processor 400 may communicate with a system memory 460, e.g., via a memory bus. In addition, by interfaces 450, connection can be made to various off-chip components such as peripheral devices, mass storage and so forth. While shown with this particular implementation in the embodiment of FIG. 5, the scope of the present invention is not limited in this regard.

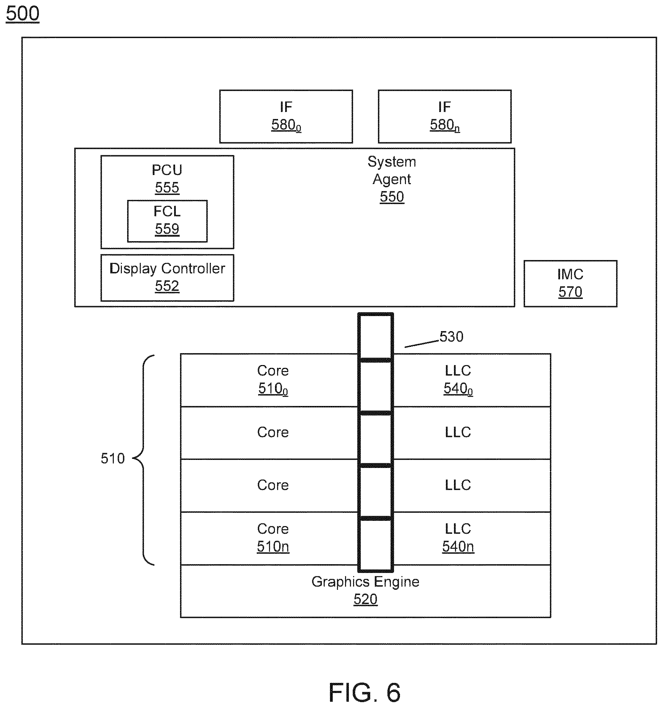

Referring now to FIG. 6, shown is a block diagram of a multi-domain processor in accordance with another embodiment of the present invention. As shown in the embodiment of FIG. 6, processor 500 includes multiple domains. Specifically, a core domain 510 can include a plurality of cores 510₀-510ₙ, a graphics domain 520 can include one or more graphics engines, and a system agent domain 550 may further be present. In some embodiments, system agent domain 550 may execute at an independent frequency than the core domain and may remain powered on at all times to handle power control events and power management such that domains 510 and 520 can be controlled to dynamically enter into and exit high power and low power states, such that the domains can exit from a low power state with a reduced reset sequence, owing to the lack of core internal PLLs and BGFs. Each of domains 510 and 520 may operate at different voltage and/or power. Note that while only shown with three domains, understand the scope of the present invention is not limited in this regard and additional domains can be present in other embodiments. For example, multiple core domains may be present each including at least one core.

In general, each core 510 may further include low level caches in addition to various execution units and additional processing elements. In turn, the various cores may be coupled to each other and to a shared cache memory formed of a plurality of units of a last level cache (LLC) 540₀ - 540ₙ. In various embodiments, LLC 540 may be shared amongst the cores and the graphics engine, as well as various media processing circuitry. As seen, a ring interconnect 530 thus couples the cores together, and provides interconnection between the cores, graphics domain 520 and system agent circuitry 550. In one embodiment, interconnect 530 can be part of the core domain. However in other embodiments the ring interconnect can be of its own domain.

As further seen, system agent domain 550 may include display controller 552 which may provide control of and an interface to an associated display. As further seen, system agent domain 550 may include a power control unit 555 which can include a frequency control logic 559 in accordance with an embodiment of the present invention to dynamically control an operating frequency of the cores and other portions of the processor.

As further seen in FIG. 6, processor 500 can further include an integrated memory controller (IMC) 570 that can provide for an interface to a system memory, such as a dynamic random access memory (DRAM). Multiple interfaces 580₀ - 580ₙ may be present to enable interconnection between the processor and other circuitry. For example, in one embodiment at least one direct media interface (DMI) interface may be provided as well as one or more Peripheral Component Interconnect Express (PCI Express™ (PCIe™)) interfaces. Still further, to provide for communications between other agents such as additional processors or other circuitry, one or more interfaces in accordance with an Intel® Quick Path Interconnect (QPI) protocol may also be provided. Although shown at this high level in the embodiment of FIG. 6, understand the scope of the present invention is not limited in this regard.

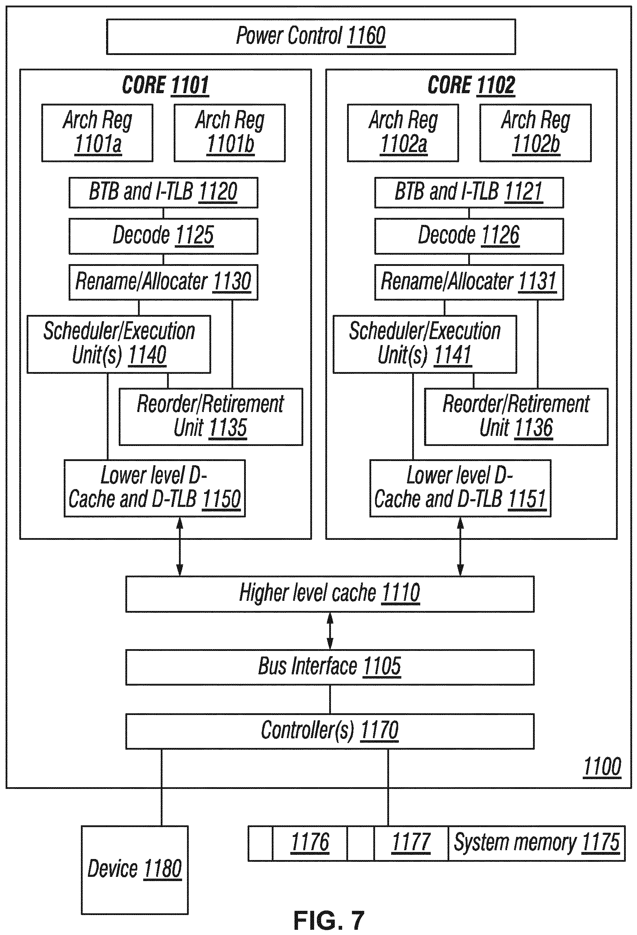

Referring to FIG. 7, an embodiment of a processor including multiple cores is illustrated. Processor 1100 includes any processor or processing device, such as a microprocessor, an embedded processor, a digital signal processor (DSP), a network processor, a handheld processor, an application processor, a co-processor, a system on a chip (SOC), or other device to execute code. Processor 1100, in one embodiment, includes at least two cores-cores 1101 and 1102, which may include asymmetric cores or symmetric cores (the illustrated embodiment). However, processor 1100 may include any number of processing elements that may be symmetric or asymmetric.

In one embodiment, a processing element refers to hardware or logic to support a software thread. Examples of hardware processing elements include: a thread unit, a thread slot, a thread, a process unit, a context, a context unit, a logical processor, a hardware thread, a core, and/or any other element, which is capable of holding a state for a processor, such as an execution state or architectural state. In other words, a processing element, in one embodiment, refers to any hardware capable of being independently associated with code, such as a software thread, operating system, application, or other code. A physical processor typically refers to an integrated circuit, which potentially includes any number of other processing elements, such as cores or hardware threads.

A core often refers to logic located on an integrated circuit capable of maintaining an independent architectural state, wherein each independently maintained architectural state is associated with at least some dedicated execution resources. In contrast to cores, a hardware thread typically refers to any logic located on an integrated circuit capable of maintaining an independent architectural state, wherein the independently maintained architectural states share access to execution resources. As can be seen, when certain resources are shared and others are dedicated to an architectural state, the line between the nomenclature of a hardware thread and core overlaps. Yet often, a core and a hardware thread are viewed by an operating system as individual logical processors, where the operating system is able to individually schedule operations on each logical processor.

Physical processor 1100, as illustrated in FIG. 7, includes two cores, cores 1101 and 1102. Here, cores 1101 and 1102 are considered symmetric cores, i.e., cores with the same configurations, functional units, and/or logic. In another embodiment, core 1101 includes an out-of-order processor core, while core 1102 includes an in-order processor core. However, cores 1101 and 1102 may be individually selected from any type of core, such as a native core, a software managed core, a core adapted to execute a native instruction set architecture (ISA), a core adapted to execute a translated ISA, a co-designed core, or other known core. Yet to further the discussion, the functional units illustrated in core 1101 are described in further detail below, as the units in core 1102 operate in a similar manner.

As depicted, core 1101 includes two hardware threads 1101a and 1101b, which may also be referred to as hardware thread slots 1101a and 1101b. Therefore, software entities, such as an operating system, in one embodiment potentially view processor 1100 as four separate processors, i.e., four logical processors or processing elements capable of executing four software threads concurrently. As alluded to above, a first thread is associated with architecture state registers 1101a, a second thread is associated with architecture state registers 1101b, a third thread may be associated with architecture state registers 1102a, and a fourth thread may be associated with architecture state registers 1102b. Here, each of the architecture state registers (1101a, 1101b, 1102a, and 1102b) may be referred to as processing elements, thread slots, or thread units, as described above. As illustrated, architecture state registers 1101a are replicated in architecture state registers 1101b, so individual architecture states/contexts are capable of being stored for logical processor 1101a and logical processor 1101b. In core 1101, other smaller resources, such as instruction pointers and renaming logic in allocator and renamer block 1130 may also be replicated for threads 1101a and 1101b. Some resources, such as re-order buffers in reorder/retirement unit 1135, ILTB 1120, load/store buffers, and queues may be shared through partitioning. Other resources, such as general purpose internal registers, page-table base register(s), low-level data-cache and data-TLB 1115, execution unit(s) 1140, and portions of out-of-order unit 1135 are potentially fully shared.

Processor 1100 often includes other resources, which may be fully shared, shared through partitioning, or dedicated by/to processing elements. In FIG. 7, an embodiment of a purely exemplary processor with illustrative logical units/resources of a processor is illustrated. Note that a processor may include, or omit, any of these functional units, as well as include any other known functional units, logic, or firmware not depicted. As illustrated, core 1101 includes a simplified, representative out-of-order (OOO) processor core. But an in-order processor may be utilized in different embodiments. The OOO core includes a branch target buffer 1120 to predict branches to be executed/taken and an instruction-translation buffer (I-TLB) 1120 to store address translation entries for instructions.

Core 1101 further includes decode module 1125 coupled to fetch unit 1120 to decode fetched elements. Fetch logic, in one embodiment, includes individual sequencers associated with thread slots 1101a, 1101b, respectively. Usually core 1101 is associated with a first ISA, which defines/specifies instructions executable on processor 1100. Often machine code instructions that are part of the first ISA include a portion of the instruction (referred to as an opcode), which references/specifies an instruction or operation to be performed. Decode logic 1125 includes circuitry that recognizes these instructions from their opcodes and passes the decoded instructions on in the pipeline for processing as defined by the first ISA. For example, decoders 1125, in one embodiment, include logic designed or adapted to recognize specific instructions, such as transactional instruction. As a result of the recognition by decoders 1125, the architecture or core 1101 takes specific, predefined actions to perform tasks associated with the appropriate instruction. It is important to note that any of the tasks, blocks, operations, and methods described herein may be performed in response to a single or multiple instructions; some of which may be new or old instructions.

In one example, allocator and renamer block 1130 includes an allocator to reserve resources, such as register files to store instruction processing results. However, threads 1101a and 1101b are potentially capable of out-of-order execution, where allocator and renamer block 1130 also reserves other resources, such as reorder buffers to track instruction results. Unit 1130 may also include a register renamer to rename program/instruction reference registers to other registers internal to processor 1100. Reorder/retirement unit 1135 includes components, such as the reorder buffers mentioned above, load buffers, and store buffers, to support out-of-order execution and later in-order retirement of instructions executed out-of-order.

Scheduler and execution unit(s) block 1140, in one embodiment, includes a scheduler unit to schedule instructions/operation on execution units. For example, a floating point instruction is scheduled on a port of an execution unit that has an available floating point execution unit. Register files associated with the execution units are also included to store information instruction processing results. Exemplary execution units include a floating point execution unit, an integer execution unit, a jump execution unit, a load execution unit, a store execution unit, and other known execution units.

Lower level data cache and data translation buffer (D-TLB) 1150 are coupled to execution unit(s) 1140. The data cache is to store recently used/operated on elements, such as data operands, which are potentially held in memory coherency states. The D-TLB is to store recent virtual/linear to physical address translations. As a specific example, a processor may include a page table structure to break physical memory into a plurality of virtual pages.

Here, cores 1101 and 1102 share access to higher-level or further-out cache 1110, which is to cache recently fetched elements. Note that higher-level or further-out refers to cache levels increasing or getting further away from the execution unit(s). In one embodiment, higher-level cache 1110 is a last-level data cache-last cache in the memory hierarchy on processor 1100-such as a second or third level data cache. However, higher level cache 1110 is not so limited, as it may be associated with or includes an instruction cache. A trace cache-a type of instruction cache-instead may be coupled after decoder 1125 to store recently decoded traces.

In the depicted configuration, processor 1100 also includes bus interface module 1105 and a power controller 1160, which may perform power sharing control in accordance with an embodiment of the present invention. Historically, controller 1170 has been included in a computing system external to processor 1100. In this scenario, bus interface 1105 is to communicate with devices external to processor 1100, such as system memory 1175, a chipset (often including a memory controller hub to connect to memory 1175 and an I/O controller hub to connect peripheral devices), a memory controller hub, a northbridge, or other integrated circuit. And in this scenario, bus 1105 may include any known interconnect, such as multi-drop bus, a point-to-point interconnect, a serial interconnect, a parallel bus, a coherent (e.g. cache coherent) bus, a layered protocol architecture, a differential bus, and a GTL bus.

Memory 1175 may be dedicated to processor 1100 or shared with other devices in a system. Common examples of types of memory 1175 include DRAM, SRAM, non-volatile memory (NV memory), and other known storage devices. Note that device 1180 may include a graphic accelerator, processor or card coupled to a memory controller hub, data storage coupled to an I/O controller hub, a wireless transceiver, a flash device, an audio controller, a network controller, or other known device.

Note however, that in the depicted embodiment, the controller 1170 is illustrated as part of processor 1100. Recently, as more logic and devices are being integrated on a single die, such as SOC, each of these devices may be incorporated on processor 1100. For example in one embodiment, memory controller hub 1170 is on the same package and/or die with processor 1100. Here, a portion of the core (an on-core portion) includes one or more controller(s) 1170 for interfacing with other devices such as memory 1175 or a graphics device 1180. The configuration including an interconnect and controllers for interfacing with such devices is often referred to as an on-core (or un-core configuration). As an example, bus interface 1105 includes a ring interconnect with a memory controller for interfacing with memory 1175 and a graphics controller for interfacing with graphics processor 1180. Yet, in the SOC environment, even more devices, such as the network interface, co-processors, memory 1175, graphics processor 1180, and any other known computer devices/interface may be integrated on a single die or integrated circuit to provide small form factor with high functionality and low power consumption.

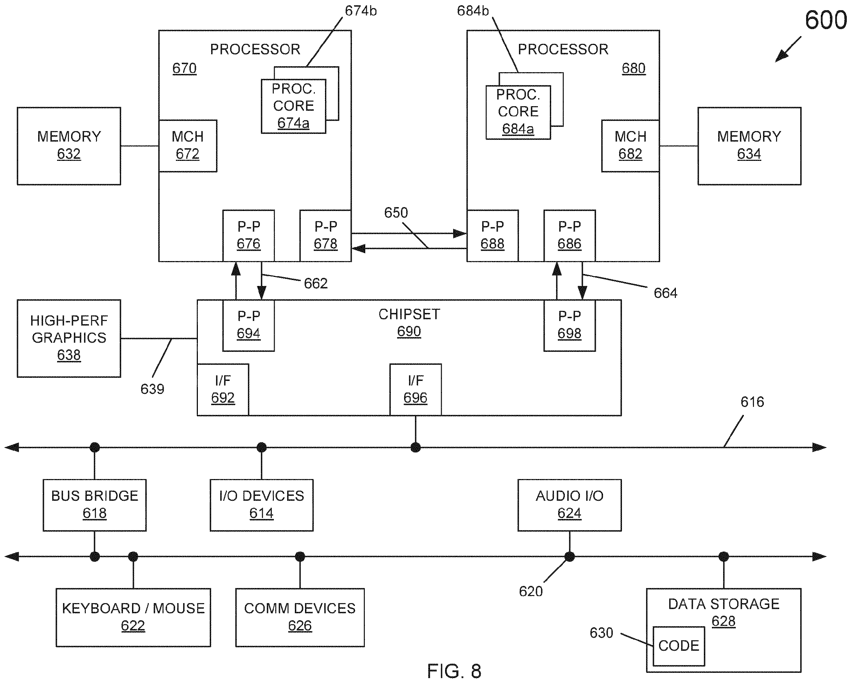

Embodiments may be implemented in many different system types. Referring now to FIG. 8, shown is a block diagram of a system in accordance with an embodiment of the present invention. As shown in FIG. 8, multiprocessor system 600 is a point-to-point interconnect system, and includes a first processor 670 and a second processor 680 coupled via a point-to-point interconnect 650. As shown in FIG. 8, each of processors 670 and 680 may be multicore processors, including first and second processor cores (i.e., processor cores 674a and 674b and processor cores 684a and 684b), although potentially many more cores may be present in the processors. Each of the processors can include a PCU or other logic to dynamically control operating frequency of clock signals provided to functional units of one or more cores or other logic, to enhance power management, reduce power consumption, and reduce latency of low power state exits in a variety of different situations, as described herein.

Still referring to FIG. 8, first processor 670 further includes a memory controller hub (MCH) 672 and point-to-point (P-P) interfaces 676 and 678. Similarly, second processor 680 includes a MCH 682 and P-P interfaces 686 and 688. As shown in FIG. 8, MCH's 672 and 682 couple the processors to respective memories, namely a memory 632 and a memory 634, which may be portions of system memory (e.g., DRAM) locally attached to the respective processors. First processor 670 and second processor 680 may be coupled to a chipset 690 via P-P interconnects 662 and 664, respectively. As shown in FIG. 8, chipset 690 includes P-P interfaces 694 and 698.

Furthermore, chipset 690 includes an interface 692 to couple chipset 690 with a high performance graphics engine 638, by a P-P interconnect 639. In turn, chipset 690 may be coupled to a first bus 616 via an interface 696. As shown in FIG. 8, various input/output (I/O) devices 614 may be coupled to first bus 616, along with a bus bridge 618 which couples first bus 616 to a second bus 620. Various devices may be coupled to second bus 620 including, for example, a keyboard/mouse 622, communication devices 626 and a data storage unit 628 such as a disk drive or other mass storage device which may include code 630, in one embodiment. Further, an audio I/O 624 may be coupled to second bus 620. Embodiments can be incorporated into other types of systems including mobile devices such as a smart cellular telephone, tablet computer, netbook, Ultrabook™, or so forth.

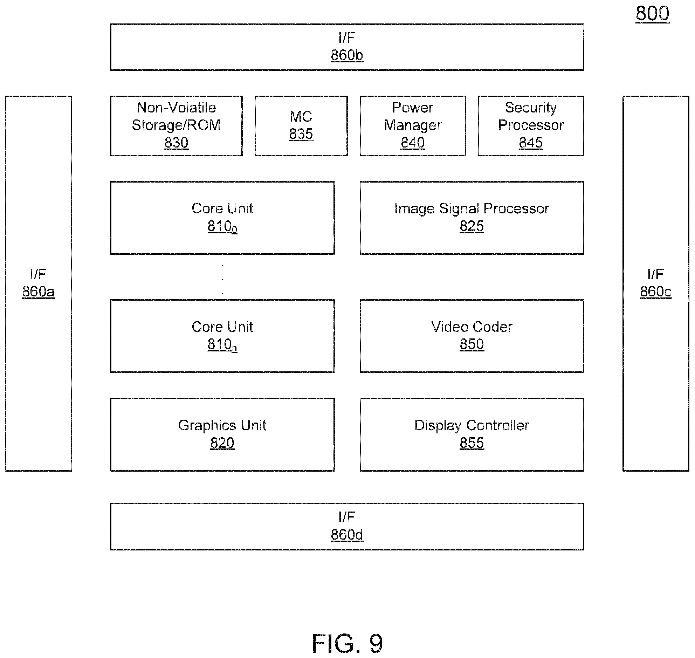

Embodiments can be implemented in processors for various markets including server processors, desktop processors, mobile processors and so forth. Referring now to FIG. 9, shown is a block diagram of a processor in accordance with an embodiment of the present invention. In the embodiment of FIG. 9, processor 800 may be a system on a chip (SoC) including multiple domains, each of which may be controlled to operate at an independent operating voltage and operating frequency. As a specific illustrative example, processor 800 may be an Intel® Architecture Core™-based processor such as an i3, i5, i7 or another such processor available from Intel Corporation, Santa Clara, CA. However, other low power processors such as available from Advanced Micro Devices, Inc. (AMD) of Sunnyvale, CA, an ARM-based design from ARM Holdings, Ltd. or customer thereof or a MIPS-based design from MIPS Technologies, Inc. of Sunnyvale, CA, or their licensees or adopters may instead be present in other embodiments such as an Apple A5 processor, a Qualcomm Snapdragon processor, or Texas Instruments OMAP processor. Such SoC may be used in a low power system such as a smartphone, tablet computer, Ultrabook™ computer or other portable computing device.

In the high level view shown in FIG. 9, processor 800 includes a plurality of core units 810₀-810ₙ. Each core unit may include one or more processor cores, one or more cache memories and other circuitry. Each core unit 810 may support one or more instruction sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA) or other instruction set or combinations thereof. Note that some of the core units may be heterogeneous resources (e.g., of a different design). In addition, each such core may be coupled to a cache memory which in an embodiment may be a shared level (L2) cache memory. A non-volatile storage 830 may be used to store various program and other data. For example, this storage may be used to store at least portions of microcode, boot information such as a BIOS, other system software or so forth.

Each core unit 810 may also include an interface such as a bus interface unit to enable interconnection to additional circuitry of the processor. In an embodiment, each core unit 810 couples to a coherent fabric that may act as a primary cache coherent on-die interconnect that in turn couples to a memory controller 835. In turn, memory controller 835 controls communications with a memory such as a dynamic random access memory (DRAM) (not shown for ease of illustration in FIG. 9).

In addition to core units, additional processing engines are present within the processor, including at least one graphics unit 820 which may include one or more graphics processing units (GPUs) to perform graphics processing as well as to possibly execute general purpose operations on the graphics processor (so-called GPGPU operation). In addition, at least one image signal processor 825 may be present. Signal processor 825 may be configured to process incoming image data received from one or more capture devices, either internal to the SoC or off-chip. Other accelerators may also be present. In the illustration of FIG. 9, a video coder 850 may perform coding operations including encoding and decoding for video information, e.g., providing hardware acceleration support for high definition video content. A display controller 855 further may be provided to accelerate display operations including providing support for internal and external displays of a system. In addition, a security processor 845 may be present to perform security operations such as secure boot operations, various cryptography operations and so forth.

Each of the units may have its power consumption controlled via a power manager 840. Power manager 840 includes control logic to determine appropriate operating voltage and frequency for each of the domains (and in some embodiments, sub-units of the domains), e.g., based on an available power budget and request for given performance and/or low power state.

In some embodiments, SoC 800 may further include a non-coherent fabric coupled to the coherent fabric to which various peripheral devices may couple. One or more interfaces 860a-860d enable communication with one or more off-chip devices. Such communications may be according to a variety of communication protocols such as PCIe™, GPIO, USB, I2C, UART, MIPI, SDIO, DDR, SPI, HDMI, among other types of communication protocols. Although shown at this high level in the embodiment of FIG. 9, understand the scope of the present invention is not limited in this regard.

The following examples pertain to further embodiments.

In one example, a processor is as defined in claim 1.

In an example, the clock generation circuit further includes a restriction logic to receive a restriction command and to cause the clock generation circuit to reduce delivery of the first clock signal to at least one of the plurality of units. The reduced delivery of the first clock signal may be at a lower frequency than the first operating frequency. The plurality of units include, in an example, a first subset of units to receive the first clock signal with the reduced delivery and a second subset of units to receive the first clock signal without restriction.

In an example, an interconnect is coupled to the core, where the interconnect is to operate using the first clock signal at the first operating frequency. An interface may directly couple the core to a system agent logic of the processor without interposition of clock crossing logic. The interface may operate according to the first clock signal, and may include a buffer to receive data according to the first clock signal at the second operating frequency and to output the data according to the first clock signal at the second operating frequency.

In an example, the processor further comprises a power control unit to generate the dynamic clock frequency command. The power control unit may issue a restriction command responsive to a low power state exit request for a second core, where the clock generation circuit is to reduce delivery of the first clock signal to at least one of the plurality of units without stopping the core, the first clock signal at a turbo mode frequency. In turn, the second core may begin the low power state exit concurrently with the reduced delivery of the first clock signal.

Note that the above processor can be implemented using various means.

In an example, the processor comprises a SoC incorporated in a user equipment touch-enabled device.

In another example, a system comprises a display and a memory, and includes the processor of one or more of the above examples.

In another example, a method is as defined in claim 9.

In another example, a computer readable medium including instructions is operable to perform the method of the above example.

In another example, an apparatus comprises means for performing the method of any one of the above examples.

In an example, the method further comprises operating the core with the clock signal at the first operating frequency and thereafter operating the core with the clock signal at the determined operating frequency, without stopping the core. The method may further include receiving a clock restriction command from a power controller, when the core is operating within at least a threshold of at least one processor constraint, and controlling the clock generation circuit responsive to the clock restriction command to drive a restricted clock signal to the at least one functional unit.

In an example, the method further includes receiving the dynamic clock frequency command during a low power state exit for a second core, and controlling the clock generation circuit to drive a restricted clock signal to the at least one functional unit concurrently with the second core exit from the low power state.

In another example, a system comprises: a processor according to claim 1. The processor may further include a PCU coupled to the core and including a first logic to determine the adjusted operating frequency and to communicate the control signal, and the phase lock loop to generate the clock signal and to provide the clock signal to a plurality of agents of the processor including the core and the PCU. In addition, the system may further include a DRAM coupled to the processor.

The phase lock loop is a single phase lock loop for the processor, in an example. In an example, the core includes an interface to directly couple to an interconnect without a clock crossing circuit. The core and the interconnect may be configured to operate at different frequencies. The core may exit a low power state and begin execution using the core clock signal at the first operating frequency during a first portion of the low power state exit, where the first operating frequency corresponds to an operating frequency of the interconnect. The first logic may thereafter cause the clock generation logic to dynamically adjust the clock signal to provide the core clock signal at the adjusted operating frequency during a second portion of the low power state exit.

Understand that various combinations of the above examples are possible.

Embodiments may be used in many different types of systems. For example, in one embodiment a communication device can be arranged to perform the various methods and techniques described herein. Of course, the scope of the present invention is not limited to a communication device, and instead other embodiments can be directed to other types of apparatus for processing instructions, or one or more machine readable media including instructions that in response to being executed on a computing device, cause the device to carry out one or more of the methods and techniques described herein.

Embodiments may be implemented in code and may be stored on a non-transitory storage medium having stored thereon instructions which can be used to program a system to perform the instructions. The storage medium may include, but is not limited to, any type of disk including floppy disks, optical disks, solid state drives (SSDs), compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

While the present invention has been described with respect to a limited number of embodiments, those skilled in the art will appreciate numerous modifications and variations therefrom. It is intended that the appended claims cover all such modifications and variations.

## Claims

1. A processor (110) comprising:
a core (200) to execute instructions, the core including a clock generation circuit (220), responsive to a power up command to cause the core to exit from a low power state, to receive and distribute a first clock signal at a first operating frequency provided from a phase lock loop of the processor to a plurality of units (225₀₁-225₀ₙ) of the core during execution of a power up sequence by the core, wherein the first operating frequency is a current operating frequency of the processor, the clock generation circuit further including a dynamic clock logic (224) to receive, during execution of the power up sequence, a dynamic clock frequency command and to cause the clock generation circuit to distribute the first clock signal to at least one of the plurality of units at a second operating frequency during the execution of the power up sequence.

2. The processor of claim 1, wherein the clock generation circuit further includes a restriction logic (222) to receive a restriction command and to cause the clock generation circuit to restrict a number of cycles of the first clock signal to be provided to at least one of the plurality of units.

3. The processor of claim 2, wherein the plurality of units includes a first subset of units to receive a reduced number of cycles of the first clock signal and a second subset of units to receive the first clock signal.

4. The processor of any one of claims 1-3, further comprising an interface to directly couple the core to a system agent logic of the processor, wherein the interface and the system agent logic are to operate according to the first clock signal.

5. The processor of claim 4, wherein the interface comprises a buffer to receive data according to the first clock signal at the second operating frequency and to output the data according to the first clock signal at the second operating frequency.

6. The processor of any one of claims 1-3, wherein the processor further comprises a power control unit to generate the dynamic clock frequency command.

7. The processor of claim 6, wherein the core is a first core, and wherein the power control unit is to issue a restriction command responsive to a low power state exit request for a second core to exit the low power state, wherein the clock generation circuit is to restrict a number of cycles of the first clock signal to be provided to at least one of the plurality of units of the first core without stopping the first core, the first clock signal at a turbo mode frequency, and wherein the second core is to begin the low power state exit concurrently with the restriction of the number of cycles of the first clock signal to be provided to the at least one of the plurality of units.

8. The processor of any one of claims 1-3, wherein the core is to exit a low power state and to begin execution using the first clock signal at the first operating frequency during a first portion of the low power state exit, the first operating frequency corresponding to an operating frequency of an interconnect structure to couple the core to one or more other cores of the processor, and the dynamic clock logic is thereafter to cause the clock generation circuit to dynamically adjust the first clock signal to provide the first clock signal at the second operating frequency during a second portion of the low power state exit.

9. A method comprising:
receiving a power up command to cause a core of a processor to exit from a low power state;
executing a power up sequence in the core responsive to the power up command;
receiving during the power up sequence, from a phase lock loop of a processor, a clock signal at a first operating frequency in a clock generation circuit of the core of the processor; distributing the clock signal to a plurality of units of the core;
receiving, during the power up sequence, a dynamic clock frequency command in dynamic clock logic of the clock generation circuit of the core;
determining an operating frequency based on the dynamic clock frequency command;
controlling the clock generation circuit according to the determined operating frequency to drive the clock signal to at least one functional unit of the core during the power up sequence at the determined operating frequency different than the first operating frequency; and
communicating, from an interface of the core of the processor, data generated by the at least one functional unit to an agent of the processor coupled to the core via an interconnect, the interface and the interconnect operating at the first operating frequency.

10. The method of claim 9, further comprising operating the core with the clock signal at the first operating frequency and thereafter operating the core with the clock signal at the determined operating frequency, without stopping the core.

11. The method of claim 9, further comprising receiving a clock restriction command from a power controller, when the core is operating within at least a threshold of at least one processor constraint, and controlling the clock generation circuit responsive to the clock restriction command to drive a clock signal with a reduced number of cycles to the at least one functional unit.

12. The method of claim 9, further comprising receiving the dynamic clock frequency command during a low power state exit for a second core, and controlling the clock generation circuit to drive a clock signal with a reduced number of cycles to the at least one functional unit concurrently with the second core exit from the low power state.

13. A machine-readable storage medium including machine-readable instructions, operable when executed, to implement a method as claimed in any one of claims 9 to 12.

## Patentansprüche

1. Prozessor (110), der Folgendes umfasst:
einen Kern (200) für die Ausführung von Befehlen, wobei der Kern eine Takterzeugungsschaltung (220) enthält, die in Reaktion auf einen Einschaltbefehl den Kern dazu veranlasst, einen Niedrigleistungszustand zu verlassen, ein erstes Taktsignal mit einer ersten Betriebsfrequenz, das von einer Phasenverriegelungsschleife des Prozessors bereitgestellt wird, zu empfangen und während des durch den Kern ausgeführten Einschaltablaufs an mehrere Einheiten (225₀₁-225₀ₙ) des Kerns zu verteilen, wobei die erste Betriebsfrequenz eine aktuelle Betriebsfrequenz des Prozessors ist, wobei die Takterzeugungsschaltung ferner eine Logik (224) für dynamischen Takt enthält, um während der Ausführung des Einschaltablaufs einen Befehl für dynamische Taktfrequenz zu empfangen und um die Takterzeugungsschaltung zu veranlassen, das erste Taktsignal während der Ausführung des Einschaltablaufs an wenigstens eine der mehreren Einheiten mit einer zweiten Betriebsfrequenz zu verteilen.

2. Prozessor nach Anspruch 1, wobei die Takterzeugungsschaltung ferner eine Einschränkungslogik (222) enthält, um einen Einschränkungsbefehl zu empfangen und um die Takterzeugungsschaltung zu veranlassen, die Anzahl von Zyklen des ersten Taktsignals, das für wenigstens eine der mehreren Einheiten bereitzustellen ist, zu beschränken.

3. Prozessor nach Anspruch 2, wobei die mehreren Einheiten eine erste Untermenge von Einheiten, um eine verringerte Anzahl von Zyklen des ersten Taktsignals zu empfangen, und eine zweite Untermenge von Einheiten, um das erste Taktsignal zu empfangen, enthalten.

4. Prozessor nach einem der Ansprüche 1-3, der ferner eine Schnittstelle umfasst, um den Kern direkt mit einer Systemagentenlogik des Prozessors zu koppeln, wobei die Schnittstelle und die Systemagentenlogik in Übereinstimmung mit dem ersten Taktsignal arbeiten sollen.

5. Prozessor nach Anspruch 4, wobei die Schnittstelle einen Puffer enthält, um Daten in Übereinstimmung mit dem ersten Taktsignal mit der zweiten Betriebsfrequenz zu empfangen und um die Daten in Übereinstimmung mit dem ersten Taktsignal mit der zweiten Betriebsfrequenz auszugeben.

6. Prozessor nach einem der Ansprüche 1-3, wobei der Prozessor ferner eine Leistungssteuereinheit enthält, um den Befehl für dynamische Taktfrequenz zu erzeugen.

7. Prozessor nach Anspruch 6, wobei der Kern ein erster Kern ist und wobei die Leistungssteuereinheit dazu dient, einen Beschränkungsbefehl in Reaktion auf eine Anforderung zum Verlassen des Niedrigleistungszustands an einen zweiten Kern auszugeben, damit er den Niedrigleistungszustand verlässt, wobei die Takterzeugungsschaltung eine Anzahl von Zyklen des ersten Taktsignals, das für wenigstens eine der mehreren Einheiten des ersten Kerns bereitzustellen ist, beschränken soll, ohne den ersten Kern anzuhalten, wobei das erste Taktsignal eine Turbomodusfrequenz besitzt, und wobei der zweite Kern mit dem Verlassen des Niedrigleistungszustands konkurrent mit der Beschränkung der Anzahl von Zyklen des ersten Taktsignals, das für die wenigstens eine der mehreren Einheiten bereitzustellen ist, beginnen soll.

8. Prozessor nach einem der Ansprüche 1-3, wobei der Kern einen Niedrigleistungszustand verlassen soll und mit der Ausführung unter Verwendung des ersten Taktsignals mit der ersten Betriebsfrequenz während eines ersten Abschnitts des Verlassens des Niedrigleistungszustands beginnen soll, wobei die erste Betriebsfrequenz einer Betriebsfrequenz einer Verbindungsstruktur für die Kopplung des Kerns mit einem oder mit mehreren anderen Kernen des Prozessors entspricht und wobei die Logik für dynamischen Takt anschließend die Takterzeugungsschaltung dazu veranlassen soll, das erste Taktsignal dynamisch einzustellen, um während eines zweiten Abschnitts des Verlassens des Niedrigleistungszustands das erste Taktsignal mit der zweiten Betriebsfrequenz bereitzustellen.

9. Verfahren, das Folgendes umfasst:
Empfangen eines Einschaltbefehls, um einen Kern eines Prozessors zu veranlassen, einen Niedrigleistungszustand zu verlassen;
Ausführen eines Einschaltablaufs im Kern in Reaktion auf den Einschaltbefehl;
Empfangen während des Einschaltablaufs von einer Phasenverriegelungsschleife eines Prozessors eines Taktsignals mit einer ersten Betriebsfrequenz in einer Takterzeugungsschaltung des Kerns des Prozessors;
Verteilen des Taktsignals an mehrere Einheiten des Kerns;
Empfangen während des Einschaltablaufs eines Befehls für dynamische Taktfrequenz in einer dynamischen Taktlogik der Takterzeugungsschaltung des Kerns;
Bestimmen einer Betriebsfrequenz anhand des Befehls für dynamische Taktfrequenz;
Steuern der Takterzeugungsschaltung in Übereinstimmung mit der bestimmten Betriebsfrequenz, um das Taktsignal während des Einschaltablaufs an wenigstens eine funktionale Einheit des Kerns mit der bestimmten Betriebsfrequenz, die von der ersten Betriebsfrequenz verschieden ist, zu liefern; und
Kommunizieren von einer Schnittstelle des Kerns des Prozessors von Daten, die durch die wenigstens eine funktionale Einheit erzeugt werden, an einen Agenten des Prozessors, der mit dem Kern über eine Verbindungseinheit gekoppelt ist, wobei die Schnittstelle und die Verbindungseinheit mit der ersten Betriebsfrequenz arbeiten.

10. Verfahren nach Anspruch 9, das ferner das Betreiben des Kerns mit dem Taktsignal mit der ersten Betriebsfrequenz und danach das Betreiben des Kerns mit dem Taktsignal mit der bestimmten Betriebsfrequenz, ohne den Kern anzuhalten, umfasst.

11. Verfahren nach Anspruch 9, das ferner das Empfangen eines Taktbeschränkungssignals von einer Leistungssteuereinheit, wenn der Kern innerhalb wenigstens eines Schwellenwertes wenigstens einer Prozessorbeschränkung arbeitet, und das Steuern der Takterzeugungsschaltung in Reaktion auf den Taktbeschränkungsbefehl, um ein Taktsignal mit einer verringerten Anzahl von Zyklen zu der wenigstens einen funktionalen Einheit zu liefern, umfasst.

12. Verfahren nach Anspruch 9, das ferner das Empfangen des Befehls für dynamische Taktfrequenz während eines Verlassens eines Niedrigleistungszustands für einen zweiten Kern und das Steuern der Takterzeugungsschaltung, um ein Taktsignal mit einer verringerten Anzahl von Zyklen zu der wenigstens einen funktionalen Einheit konkurrent mit dem Verlassen des Niedrigleistungszustands durch den zweiten Kern zu liefern, umfasst.

13. Maschinenlesbares Speichermedium, das maschinenlesbare Befehle enthält, die, wenn sie ausgeführt werden, dazu dienen, ein Verfahren nach einem der Ansprüche 9 bis 12 zu implementieren.

## Revendications

1. Processeur (110) comprenant :
un noyau (200) pour exécuter des instructions, le noyau comprenant un circuit de génération d'horloge (220), sensible à une commande de mise sous tension pour faire sortir le noyau d'un état de faible puissance, pour recevoir et distribuer un premier signal d'horloge à une première fréquence de fonctionnement fournie par une boucle à verrouillage de phase du processeur à une pluralité d'unités (225₀₁-225₀ₙ) du noyau pendant l'exécution d'une séquence de mise sous tension par le noyau, la première fréquence de fonctionnement étant une fréquence de fonctionnement actuelle du processeur, le circuit de génération d'horloge comprenant en outre une logique d'horloge dynamique (224) pour recevoir, pendant l'exécution de la séquence de mise sous tension, une commande de fréquence d'horloge dynamique et amener le circuit de génération d'horloge à distribuer le premier signal d'horloge à au moins une unité de la pluralité d'unités à une deuxième fréquence de fonctionnement pendant l'exécution de la séquence de mise sous tension.

2. Processeur selon la revendication 1, le circuit de génération d'horloge comprenant en outre une logique de restriction (222) pour recevoir une commande de restriction et pour amener le circuit de génération d'horloge à restreindre un certain nombre de cycles du premier signal d'horloge à fournir à au moins l'une de la pluralité d'unités.

3. Processeur selon la revendication 2, la pluralité d'unités comprenant un premier sous-ensemble d'unités pour recevoir un nombre réduit de cycles du premier signal d'horloge et un deuxième sous-ensemble d'unités pour recevoir le premier signal d'horloge.

4. Processeur selon l'une quelconque des revendications 1 à 3, comprenant en outre une interface pour coupler directement le noyau à une logique d'agent système du processeur, l'interface et la logique d'agent système devant fonctionner en fonction du premier signal d'horloge.

5. Processeur selon la revendication 4, l'interface comprenant un tampon pour recevoir des données en fonction du premier signal d'horloge à la deuxième fréquence de fonctionnement et pour émettre en sortie les données en fonction du premier signal d'horloge à la deuxième fréquence de fonctionnement.

6. Processeur selon l'une quelconque des revendications 1 à 3, le processeur comprenant en outre une unité de commande de puissance pour générer la commande de fréquence d'horloge dynamique.

7. Processeur selon la revendication 6, le noyau étant un premier noyau, et l'unité de commande de puissance devant émettre une commande de restriction sensible à une demande de sortie d'état de faible puissance pour un deuxième noyau afin de sortir de l'état de faible puissance, le circuit de génération d'horloge devant restreindre un nombre de cycles du premier signal d'horloge à fournir à au moins une unité parmi la pluralité des unités du premier noyau sans arrêter le premier noyau, le premier signal d'horloge à une fréquence de mode turbo, et le deuxième noyau devant commencer la sortie d'état de faible puissance en même temps que la restriction du nombre de cycles du premier signal d'horloge à fournir à l'au moins une unité parmi la pluralité d'unités.

8. Processeur selon l'une quelconque des revendications 1 à 3, le noyau devant sortir d'un état de faible puissance et commencer son exécution en utilisant le premier signal d'horloge à la première fréquence de fonctionnement pendant une première partie de la sortie d'état de faible puissance, la première fréquence de fonctionnement correspondant à une fréquence de fonctionnement d'une structure d'interconnexion pour coupler le noyau à un ou plusieurs autres noyaux du processeur, et la logique d'horloge dynamique devant ensuite amener le circuit de génération d'horloge à ajuster de façon dynamique le premier signal d'horloge pour délivrer le premier signal d'horloge à la deuxième fréquence de fonctionnement pendant une deuxième partie de la sortie d'état de faible puissance.

9. Procédé comprenant les étapes consistant à :
la réception d'une commande de mise sous tension pour amener un noyau d'un processeur à sortir d'un état de faible puissance ;
l'exécution d'une séquence de mise sous tension dans le noyau en réponse à la commande de mise sous tension ;
la réception pendant la séquence de mise sous tension, à partir d'une boucle à verrouillage de phase d'un processeur, d'un signal d'horloge à une première fréquence de fonctionnement dans un circuit de génération d'horloge du noyau du processeur ;
la distribution du signal d'horloge à une pluralité d'unités du noyau ;
la réception, pendant la séquence de mise sous tension, d'une commande de fréquence d'horloge dynamique dans la logique d'horloge dynamique du circuit de génération d'horloge du noyau ;
la détermination d'une fréquence de fonctionnement basée sur la commande de fréquence d'horloge dynamique ;
la commande du circuit de génération d'horloge en fonction de la fréquence de fonctionnement déterminée pour envoyer le signal d'horloge à au moins une unité fonctionnelle du noyau pendant la séquence de mise sous tension à la fréquence de fonctionnement déterminée différente de la première fréquence de fonctionnement ; et
la communication, à partir d'une interface du noyau du processeur, de données générées par l'au moins une unité fonctionnelle à un agent du processeur couplé au noyau via une interconnexion, l'interface et l'interconnexion fonctionnant à la première fréquence de fonctionnement.

10. Procédé selon la revendication 9, comprenant en outre le fonctionnement du noyau avec le signal d'horloge à la première fréquence de fonctionnement et ensuite le fonctionnement du noyau avec le signal d'horloge à la fréquence de fonctionnement déterminée, sans arrêter le noyau.

11. Procédé selon la revendication 9, comprenant en outre la réception d'une commande de restriction d'horloge provenant d'un dispositif de commande de puissance, lorsque le noyau fonctionne en deçà d'un seuil d'au moins une contrainte de processeur, et la commande du circuit de génération d'horloge sensible à la commande de restriction d'horloge pour envoyer un signal d'horloge avec un nombre réduit de cycles à l'au moins une unité fonctionnelle.

12. Procédé selon la revendication 9, comprenant en outre la réception de la commande de fréquence d'horloge dynamique pendant une sortie d'état de faible puissance pour un deuxième noyau, et la commande du circuit de génération d'horloge pour envoyer un signal d'horloge avec un nombre réduit de cycles à l'au moins une unité fonctionnelle simultanément avec la sortie du deuxième noyau de l'état de faible puissance.

13. Support de stockage lisible par machine comprenant des instructions lisibles par machine, utilisables lorsqu'elles sont exécutées, pour mettre en oeuvre un procédé selon l'une quelconque des revendications 9 à 12.
